# EUROPÄISCHE PATENTSCHRIFT

(11) **EP 1 523 153 B1**
(45) Veröffentlichungstag und Bekanntmachung des Hinweises auf die Patenterteilung: **01.10.2014**
(21) Anmeldenummer: 04450189.8
(22) Anmeldetag: 08.10.2004
(51) Int. Cl.: H04L 29/06, G06F 9/45, G06F 11/08, H04L 29/08, H04L 29/14

(54) **Verfahren und Vorrichtung zur Realisierung einer zeitgesteuerten Kommunikation**
Method and apparatus for carrying out time-controlled communications
Procédé et dispositf pour des communications commandées temporellement

(30) Priorität: 08.10.2003 AT 15872003
(43) Veröffentlichungstag der Anmeldung: 13.04.2005
(73) Patentinhaber: TTTech Computertechnik AG, 1040 Wien (AT)
(72) Erfinder: Schmidt, Eric, 2143 Grosskrut (AT); Kopetz, Hermann, 2500 Baden bei Wien (AT)
(74) Vertreter: Patentanwaltskanzlei Matschnig & Forsthuber OG

(56) Entgegenhaltungen:
- EP-A- 0 622 712
- EP-A- 1 170 903
- WO-A-01/13230
- US-A- 5 694 542
- KOPETZ H ET AL: "The transparent implementation of fault tolerance in the time-triggered architecture" DEPENDABLE COMPUTING FOR CRITICAL APPLICATIONS 7, 1999 SAN JOSE, CA, USA 6-8 JAN. 1999, PISCATAWAY, NJ, USA,IEEE, US, 6. Januar 1999 (1999-01-06), Seiten 191-205, XP010366438 ISBN: 0-7695-0284-9
- KOPETZ H ET AL: "Temporal uncertainties in interactions among real-time objects" PROCEEDINGS OF THE SYMPOSIUM ON RELIABLE DISTRIBUTED SYSTEMS. HUNTSVILLE, OCT. 9 - 11, 1990, LOS ALAMITOS. IEEE COMP. SOC. PRESS, US, Bd. SYMP. 9, 9. Oktober 1990 (1990-10-09), Seiten 165-174, XP010020958 ISBN: 0-8186-2081-1
- TTCHIP ENTWICKLUNGSGESM.B.H.: "Fast TTP Communication Controller ? C2S" TTCHIP ENTWICKLUNGSGESM.B.H., [Online] 20. Januar 2003 (2003-01-20), Seiten 1-2, XP002392802 Gefunden im Internet: URL:http://www.ttchip.com/Publish/Products /Content/TTChip-C2S-Flyer.pdf> [gefunden am 2006-07-31]
- KOPTEZ H: "Fault Containment and Error Detection in TTP/C and FlexRay" COMPUTER, 28. August 2002 (2002-08-28), XP002386705

## Beschreibung

### TECHNISCHES UMFELD

Die Erfindung betrifft die Realisierung eines zeitgesteuerten Kommunikationskontrollers in einem verteilten Computersystem, in dem mehrere Knotenrechner Nachrichten austauschen und mittels eines verteilten fehlertoleranten Algorithmus eine verteilte globale Zeitbasis aufbauen.

### HINTERGRUND DER ERFINDUNG

Zeitgesteuerte verteilte Echtzeitsysteme stoßen aufgrund ihres vorhersehbaren Zeitverhaltens auf großes industrielles Interesse. Ein zeitgesteuertes verteiltes Echtzeitsystem besteht aus einer Anzahl von Knotenrechnern, die über ein Kommunikationssystem zum Austausch von Nachrichten verbunden sind. Für die Abwicklung dieser Kommunikation wurde (insbesondere für den Datenaustausch mit Baudraten über 100 kbit/s) bisher stets eine dedizierte Hardware verwendet, welche zusätzliche Kosten bzw. Einschränkungen beim Knotenrechner zur Folge hatte.

Zeitgesteuerte (zeitgetriggerte) Systeme sind ausführlich in H. Kopetz: "Real-Time Systems, Design Principles for Distributed Embedded Applications", ISBN 0-7923-9894-7, Boston Kluwer Academic Publishers sowie in H. Kopetz & D. Millinger, "The transparent implementation of fault tolerance in the time-triggered architecture", Dependable Computing for Critical Applications 7 (1999) pp.191-205 behandelt. Nähere Details über das zeitgesteuerte Protokoll TTP/C können dem "TTP/C Specification Document", erhältlich von *www.tttech.com*, entnommen werden.

Ein von dem Hostrechner unabhängiger zeitgesteuerter Kommunikationskontroller ist in US 5,694,542 beschrieben.

In WO 01/13230 A1 beschreibt ausgehend von der bekannten Architektur eines fehlertoleranten verteilten Computersystems ein Verfahren zum Erzwingen der Fail-Silent-Eigneschaft in einem derartigen Computersystem.

### ZUSAMMENFASSUNG

Die vorliegende Erfindung hat zum Ziel, einen zeitgesteuerten Kommunikationskontroller mittels Standardhardware zu realisieren. Die gestellte Aufgabe wird mittels einer Vorrichtung gemäß dem Anspruch 1 gelöst.

Gemäß der Erfindung wird ein COTS (commercial-off-the-shelf) Hardwarebaustein (ein single chip microcontroller) mittels eines innovativen Verfahrens derart gesteuert, dass ohne Verwendung von externen Logikbausteinen ein autonomer Kommunikationskontroller für ein zeitgesteuertes fehlertolerantes Kommunikationssystem aufgebaut werden kann, das das Senden und Empfangen von Nachrichten übernimmt sowie eine globale Zeit bereitstellt und dabei weitgehend den Hauptprozessor von der Abwicklung der Kommunikation entlastet.

### KURZE BESCHREIBUNG DER ABBILDUNGEN

Das vorab beschriebene Ziel und andere neue Eigenschaften der vorliegenden Erfindung werden in den angeführten Figuren erläutert.
Fig. 1 zeigt die Struktur eines verteilten Computersystems (hier bestehend aus vier Knotenrechnern, verbunden über zwei bidirektionale Kommunikationskanäle).
Fig. 2. zeigt den inneren Aufbau eines Knotenrechners.

### BESCHREIBUNG EINER REALISIERUNG

Im folgenden Abschnitt wird eine Realisierung der Erfindung an einer nicht-einschränkenden beispielhaften Implementierung auf einem Hardwarebaustein (single-chip Mikrocontroller) 200 gezeigt.

### Architektur

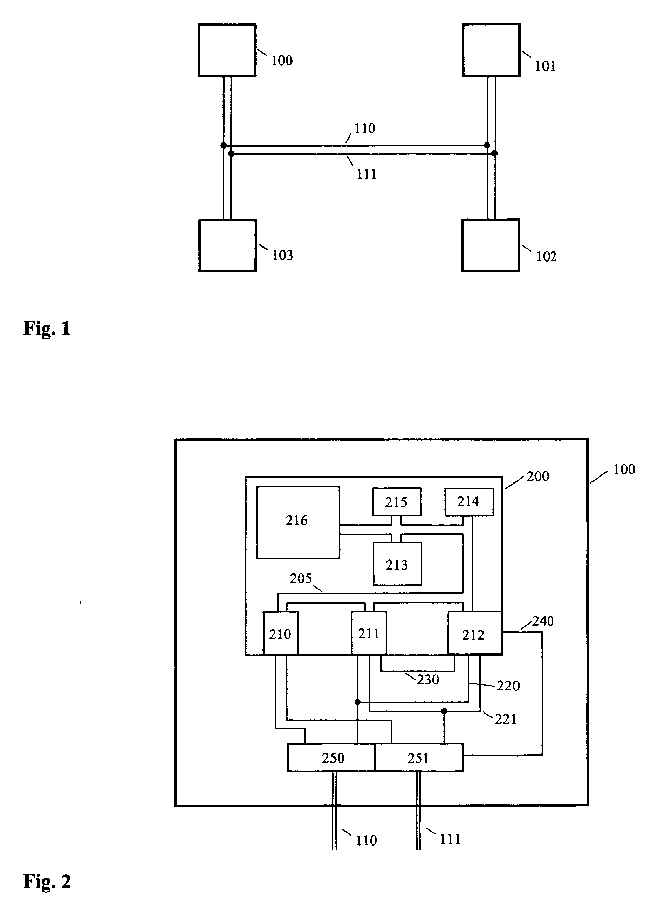

Fig. 1 zeigt die Struktur eines verteilten Computersystems, bestehend aus 4 Knotenrechnern **100**, **101**, **102** und **103**, welche jeweils über zwei bidirektionale Kommunikationskanäle **110** und **111** miteinander verbunden sind. Über die beiden Kommunikationskanäle **110** und **111** werden periodisch Nachrichten ausgetauscht. Innerhalb jedes Knotenrechners muss das dem gemeinsamen Kommunikationsprotokoll entsprechende Senden und Empfangen von Nachrichten realisiert werden. Darüber hinaus wird eine globale Zeit bereitgestellt. Für diese Aufgaben wurde bisher ein separater Kommunikationskontroller verwendet. Abhängig von der Leistungsfähigkeit des im Knotenrechner **100** eingesetzten Mikrokontrollers **200** und den Anforderungen durch das verwendete Kommunikationsprotokoll kann dies jedoch im Mikrokontroller **200** selbst bewältigt werden. Dabei soll der im Mikrokontroller **200** integrierte Hauptprozessor **216** möglichst nicht durch die Kommunikation belastet werden.

Fig.2 zeigt den inneren Aufbau eines Knotenrechners **100** mit einem geeigneten Mikrokontroller **200**. Der Mikrokontroller **200** ist hierbei nicht direkt mit den angeschlossenen Kommunikationskanälen **110** und **111** verbunden. Zur Pegel- und Leistungsanpassung sind 2 Leitungstreiber (Transceiver) **250** und **251** zwischengeschaltet. Für die Abwicklung der zeitgesteuerten fehlertoleranten Kommunikation und der Bereitstellung einer globalen Zeit wird vor allem ein geeigneter im Mikrokontroller **200** integrierter Koprozessor **213** in Verbindung mit einem innovativen in Software realisierten Algorithmus und entsprechenden weiteren Funktionseinheiten des Mikrokontrollers **200** verwendet. Die wesentlichen Funktionseinheiten sind:
- interner Datenbus **205** für die Übertragung von Daten innerhalb des Mikrokontrollers **200**
- Sendeeinheit **210** für das Senden von Daten auf den entsprechenden Kommunikationskanälen **110** und **111**
- Empfangseinheit **211** für den Empfang von Daten von ein oder mehreren Kommunikationskanälen **110** und **111** über die Empfangsleitungen **220** und **221**
- Zeiterfassungseinheit **212** für die genaue Erfassung des Zeitpunktes des Eintreffens empfangener Nachrichten durch die parallele Auswertung der Empfangsleitungen **220** und **221 -** optional auch zur Bereitstellung eines Taktsignals **230** für den korrekten Datenempfang sowie eines Überwachungssignals **240** zur Unterbindung unerlaubten Sendens verwendet
- Koprozessor **213** zur Steuerung der Kommunikation unter Verwendung der Funktionseinheiten
- Datentransfereinheit **214** zur Unterstützung der internen Übertragungsvorgänge zwischen den Funktionseinheiten
- Speicher **215**, welcher vom Koprozessor **213** und vom Hauptprozessor **216** zugreifbare Daten enthält - verwendet für ankommende und zu sendende Nachrichten und zugehörigen Zustandsinformationen
- Hauptprozessor **216**, der die Nachrichten und die globale Zeit für die Ausführung seiner Anwendung benutzt

### Funktion 'Senden von Daten'

Das Senden von Daten erfolgt durch die vom Koprozessor **213** zeitgerecht angestoßene Übertragung von Daten an die Sendeeinheit **210**, wobei die Datentransfereinheit **214** die interne Übertragung der Daten aus dem Speicher **215** in die Sendeeinheit **210** unterstützt.

### Funktion 'Empfang von Daten'

Der Empfang von Daten erfolgt durch die vom Koprozessor **213** durchgeführte, zeitgerechte Bereitschaltung der Empfangseinheit **211**, wobei zusätzlich die Empfangsleitungen **220** und **221** auch an die Zeiterfassungseinheit **212** geführt sind, um den genauen Zeitstempel des Eintreffens der Nachricht zu erfassen. Aus diesen Informationen wird Gültigkeit und Bedeutung der empfangenen Nachricht selbst aber auch die Abweichung zwischen der Uhr des Senders und der eigenen Uhr ermittelt. Zusammen mit der bekannten Verzögerungszeit des Kanals kann hiermit mit einem verteilten fehlertoleranten Algorithmus eine verteilte globale Zeitbasis aufgebaut werden. Zusätzlich kann es notwendig sein für die Empfangseinheit **211** ein Taktsignal **230** zu generieren um den eintreffenden Bitstrom zu den richtigen Zeitpunkten abzutasten. Dies wird vom Koprozessor **213** gesteuert und unter Verwendung einer Ausgabefunktion der Zeiterfassungseinheit **212** generiert. Die Daten der empfangenen Nachricht werden letztlich nach Durchführung von Überprüfungen in aufbereiteter Form in einem Speicher **215** dem Hauptprozessor **216** zusammen mit Zustandsinformationen zur Verfügung gestellt.

### Funktion 'globale Zeit'

Die globale Zeit wird durch den Koprozessor **213** aus der in der Zeiterfassungseinheit **212** verfügbaren eigenen Uhr und den beim Empfang von Nachrichten erhaltenen Zusatzinformationen ermittelt. Hierbei wird nach einem verteilten fehlertoleranten Algorithmus eine verteilte globale Zeitbasis aufgebaut, welche im Wesentlichen als variabler Korrekturterm zu der eigenen Uhr verwendet werden kann um Prozesse und Algorithmen (verteilt über das gesamte Computersystem) zu festgelegten Ticks der globalen Zeit zu aktivieren.

### Funktion 'Überwachungssignal'

Als Zusatzfunktion kann unter Verwendung einer Ausgabefunktion der Zeiterfassungseinheit **212** ein Überwachungssignal **240** generiert werden, um ein Senden außerhalb des erlaubten Zeitfensters zu unterbinden. Dieses Überwachungssignal **240** schaltet die Sendeendstufen innerhalb der beiden Leitungstreiber (Transceiver) **250** und **251** ab.

## Patentansprüche

1. Vorrichtung zur zeitgesteuerten Kommunikation in einem verteilten Computersystem, in dem mehrere Knotenrechner (100,101,102,103) über ein Kommunikationssystem, bestehend aus einem oder mehreren Kommunikationskanälen (110,111), Nachrichten austauschen, wobei die Knotenrechner mittels eines verteilten fehlertoleranten Algorithmus eine verteilte globale Zeitbasis aufbauen, wobei
in einem Mikrocontroller (200) eines Knotenrechners (100) die Funktionen eines autonomen Kommunikationskontrollers ohne Verwendung von externen Logikbausteinen unter Verwendung von Funktionseinheiten eines kommerziell erhältlichen Hardwarebausteins realisiert sind,
wobei zumindest eine als Funktionseinheit des Hardwarebausteins realisierte Empfangseinheit (211) zum Empfangen von Nachrichten sowie zumindest eine als Funktionseinheit des Hardwarebausteins realisierte Zeiterfassungseinheit (212) zum Erfassen des Zeitpunkts des Eintreffens einer Nachricht vorgesehen ist, **dadurch gekennzeichnet, daß** eine Empfangsleitung (220) zumindest eines ersten Kommunikationskanals (110) parallel an die Empfangseinheit (211) und an die Zeiterfassungseinheit (212) zur Ermittlung einer globalen Zeit anhand der beim Empfang von Nachrichten erhaltenen Information angeschlossen ist.

2. Vorrichtung nach Anspruch 1, **dadurch gekennzeichnet, dass** seitens der Zeiterfassungseinheit (212) beim Eintreffen einer Nachricht der Zeitpunkt des Eintreffens in einem Zeitstempel erfasst wird.

3. Vorrichtung nach Anspruch 2, **dadurch gekennzeichnet, dass** nach dem Eintreffen einer Nachricht der gemessene Zeitstempel mit dem erwarteten Zeitpunkt des Eintreffens verglichen wird und daraus die Zeitdifferenz zwischen der Uhr des Senders und der Uhr des Empfängers bestimmt wird.

4. Vorrichtung nach Anspruch 3, **dadurch gekennzeichnet, dass** die ermittelte Zeitdifferenz um die bekannte Verzögerungszeit des Kanals korrigiert wird.

5. Vorrichtung nach einem der Ansprüche 1 bis 4, **dadurch gekennzeichnet, dass** die Empfangseinheit (211) und eine als Funktionseinheit des Hardwarebausteins realisierte Sendeeinheit (210) als serielle Einheiten realisiert sind.

6. Vorrichtung nach einem der Ansprüche 1 bis 5, **gekennzeichnet durch** einen integrierten Koprozessor (213), der in Verbindung mit der Empfangseinheit (211) und eine als Funktionseinheit des Hardwarebausteins realisierte Sendeeinheit (210) autonom die Logik eines zeitgesteuerten Protokolls abwickelt.

7. Vorrichtung nach Anspruch 6, **dadurch gekennzeichnet, dass** der Protokollablauf durch eine Anpassung der Software im Koprozessor (213) verändert werden kann.

8. Vorrichtung nach Anspruch 6 oder 7, **gekennzeichnet durch** eine als Funktionseinheit des Hardwarebausteins realisierte Datentransfereinheit (214), die den Koprozessor (213) bei internen Übertragungen zwischen der Empfangseinheit (211), der Sendeeinheit (210), der zumindest einen Zeiterfassungseinheit (212) sowie einem Speicher (215) unterstützt.

9. Vorrichtung nach einem der Ansprüche 6 bis 8, **dadurch gekennzeichnet, dass** der Koprozessor (213), abgeleitet aus seiner lokalen Zeit sowie Informationen aus einer Zeiterfassungseinheit (212) und/oder empfangenen Nachrichten, eine globale Zeit ermittelt.

10. Vorrichtung nach Anspruch 9, **dadurch gekennzeichnet, dass** bei Erreichen eines festgelegten Ticks der globalen Zeit eine Nachricht auf einem oder beiden Kanälen gesendet wird.

11. Vorrichtung nach einem der Ansprüche 6 bis 10, **gekennzeichnet durch** einen integrierten Hauptprozessor (216) und einen integrierten Koprozessor (213), sowie ein vom Koprozessor und Hauptprozessor zugreifbaren Speicher (215), der als Nachrichtenspeicher für die ankommenden und zu sendenden Nachrichten und zugehörigen Zustandsinformationen verwendet wird.

12. Vorrichtung nach Anspruch 11, **dadurch gekennzeichnet, dass** der Koprozessor (213) ankommende Nachrichten in dem Speicher (215) für den Hauptprozessor (216) bereitstellt.

13. Vorrichtung nach Anspruch 11 oder 12, **dadurch gekennzeichnet, dass** der Koprozessor (213) für von dem Hauptprozessor (216) in den Speicher (215) geschriebene ausgehende Nachrichten autonom entscheidet, wann diese Nachrichten gesendet werden.

14. Vorrichtung nach einem der Ansprüche 6 bis 13, **dadurch gekennzeichnet, dass** der Koprozessor (213) vor dem erwarteten Eintreffen einer Nachricht die Empfangseinheit (211) in Bereitschaft setzt und der tatsächliche Empfangsvorgang autonom von der Empfangseinheit (211) in Zusammenspiel mit der Datentransfereinheit (214) abgewickelt wird.

15. Vorrichtung nach einem der Ansprüche 6 bis 14, **dadurch gekennzeichnet, dass** der Koprozessor (213) die Sendeeinheit (210) zu einem geeigneten Zeitpunkt anstößt, damit der tatsächliche Sendevorgang autonom von der Sendeeinheit (210) in Zusammenspiel mit der Datentransfereinheit (214) abgewickelt wird.

16. Vorrichtung nach einem der Ansprüche 1 bis 15, **gekennzeichnet durch** eine als Funktionseinheit des Hardwarebausteins realisierte Zeiterfassungseinheit (212), die für die Empfangseinheit (211) ein Taktsignal (230) generiert, um den eintreffenden Bitstrom zu den richtigen Zeitpunkten abzutasten.

17. Vorrichtung nach einem der Ansprüche 1 bis 16, **gekennzeichnet durch** eine als Funktionseinheit des Hardwarebausteins realisierte Zeiterfassungseinheit (212), die aus *a priori* bekannten Daten ein Überwachungssignal (240) erzeugt, mit dem ein Senden außerhalb des erlaubten Zeitfensters unterbunden wird.

## Claims

1. A device for carrying out time-controlled communication in a distributed computer system, in which a plurality of node computers (100, 101, 102, 103) exchange messages via a communication system consisting of one or more communication channels (110, 111), wherein the node computers establish a distributed global time base by means of a distributed fault-tolerant algorithm, wherein
the functions of an autonomous communication controller are implemented in a microcontroller (200) of a node computer (100) without use of external logic modules with use of functional units of a commercially obtainable hardware module, wherein at least one receiving unit (211) formed as a functional unit of the hardware module for receiving messages and also at least one time recording unit (212) formed as a functional unit of the hardware module for recording the moment in time when a message arrives are provided, **characterised in that** a receiving line (220) of at least one first communication channel (110) is connected parallel to the receiving unit (211) and to the time recording unit (212) for determining a global time on the basis of the information obtained upon receipt of messages.

2. The device according to Claim 1, **characterised in that** the moment in time when a message arrives is recorded in a timestamp by the time recording unit (212).

3. The device according to Claim 2, **characterised in that** once a message has arrived the measured timestamp is compared with the expected moment in time of arrival and from this the time difference between the clock of the sender and the clock of the receiver is determined.

4. The device according to Claim 3, **characterised in that** the determined time difference is corrected by the known delay time of the channel.

5. The device according to one of Claims 1 to 4, **characterised in that** the receiving unit (211) and a transmission unit (210) formed as a functional unit of the hardware module are formed as serial units.

6. The device according to one of Claims 1 to 5, **characterised by** an integrated coprocessor (213), which autonomously processes the logic of a time-controlled protocol in conjunction with the receiving unit (211) and a transmission unit (210) formed as a functional unit of the hardware module.

7. The device according to Claim 6, **characterised in that** the protocol sequence can be changed by an adaptation of the software in the coprocessor (213).

8. The device according to Claim 6 or 7, **characterised by** a data transfer unit (214), which is formed as a functional unit of the hardware module and which assists the coprocessor (213) with internal transmissions between the receiving unit (211), the transmission unit (210), the at least one time recording unit (212) and a memory (215).

9. The device according to one of Claims 6 to 8, **characterised in that** the coprocessor (213) determines a global time derived from its local time and also information from a time recording unit (212) and/or received messages.

10. The device according to Claim 9, **characterised in that** a message is sent to one or both channels when a defined tick of the global time is reached.

11. The device according to one of Claims 6 to 10, **characterised by** an integrated main processor (216) and an integrated coprocessor (213), and also a memory (215) that can be accessed by the coprocessor and main processor and that is used as a message memory for the incoming messages and the messages to be sent and associated state information.

12. The device according to Claim 11, **characterised in that** the coprocessor (213) provides incoming messages in the memory (215) for the main processor (216).

13. The device according to Claim 11 or 12, **characterised in that** the coprocessor (213), for outgoing messages written by the main processor (216) into the memory (215), decides autonomously when these messages are sent.

14. The device according to one of Claims 6 to 13, **characterised in that** the coprocessor (213) prepares the receiving unit (211) prior to the expected arrival of a message and the actual receipt process is executed autonomously by the receiving unit (211) in cooperation with the data transfer unit (214).

15. The device according to one of Claims 6 to 14, **characterised in that** the coprocessor (213) activates the transmission unit (210) at a suitable moment in time so that the actual transmission process is executed autonomously by the transmission unit (210) in cooperation with the data transfer unit (214).

16. The device according to one of Claims 1 to 15, **characterised by** a time recording unit (212) which is formed as a functional unit of the hardware module and which generates a clock signal for the receiving unit (211) in order to scan the incoming bit stream at the correct moments in time.

17. The device according to one of Claims 1 to 16, **characterised by** a time recording unit (212) which is formed as a functional unit of the hardware module and which generates a monitoring signal (240) from data known *a priori,* which monitoring signal is used to prevent a transmission outside the allowed time window.

## Revendications

1. Dispositif servant à la communication commandée dans le temps dans un système informatique distribué, dans lequel plusieurs ordinateurs nodaux (100, 101, 102, 103) échangent, par l'intermédiaire d'un système de communication, constitué d'un ou de plusieurs canaux de communication (110, 111), des messages, sachant que les ordinateurs nodaux établissent, au moyen d'un algorithme distribué tolérant aux erreurs, une base temporelle globale répartie,
sachant que les fonctions d'un contrôleur de communication autonome sont réalisées, dans un microcontrôleur (200) d'un ordinateur nodal (100) sans utiliser des éléments logiques externes, en utilisant des unités fonctionnelles d'un élément matériel disponible dans le commerce,
sachant que sont prévues au moins une unité de réception (211) réalisée sous la forme d'une unité fonctionnelle de l'élément matériel et servant à recevoir des messages ainsi qu'au moins une unité de détection de temps (212) réalisée sous la forme d'une unité fonctionnelle de l'élément matériel et servant à détecter le moment de la réception d'un message, **caractérisé en ce qu'**une ligne de réception (220) d'au moins un premier canal de communication (110) est raccordée en parallèle à l'unité de réception (211) et à l'unité de détection de temps (212) servant à déterminer une durée globale à l'aide de l'information extraite des messages au moment de la réception.

2. Dispositif selon la revendication 1, **caractérisé en ce que** le moment de la réception est détecté dans une estampille temporelle du côté de l'unité de détection de temps (212) à réception d'un message.

3. Dispositif selon la revendication 2, **caractérisé en ce que**, une fois un message reçu, l'estampille temporelle mesurée est comparée au moment présumé de la réception, et **en ce qu'**on détermine de cette comparaison la différence de temps entre l'heure de l'expéditeur et l'heure du destinataire.

4. Dispositif selon la revendication 3, **caractérisé en ce que** la différence de temps déterminée est corrigée de la durée de temporisation connue du canal.

5. Dispositif selon l'une quelconque des revendications 1 à 4, **caractérisé en ce que** l'unité de réception (211) et une unité d'émission (210) réalisée sous la forme d'une unité fonctionnelle de l'élément matériel sont réalisées sous la forme d'unités en série.

6. Dispositif selon l'une quelconque des revendications 1 à 5, **caractérisé par** un coprocesseur (213) intégré, qui exécute, en lien avec l'unité de réception (211) et une unité d'émission (210) réalisée sous la forme d'une unité fonctionnelle de l'élément matériel, de manière autonome la logique d'un protocole commandé dans le temps.

7. Dispositif selon la revendication 6, **caractérisé en ce que** le déroulement du protocole peut être modifié en adaptant les logiciels installés dans le coprocesseur (213).

8. Dispositif selon la revendication 6 ou 7, **caractérisé par** une unité de transfert de données (214) réalisée sous la forme d'une unité fonctionnelle de l'élément matériel, ladite unité de transfert des données soutenant le coprocesseur (213) lors de transmissions internes effectuées entre l'unité de réception (211), l'unité d'émission (210), l'unité de détection de temps (212) au moins au nombre de une et une mémoire (215).

9. Dispositif selon l'une quelconque des revendications 6 à 8, **caractérisé en ce que** le coprocesseur (213) détermine une durée globale, à partir de son temps local ainsi qu'à partir des informations issues d'une unité de détection de temps (212) et/ou issues des messages reçus.

10. Dispositif selon la revendication 9, **caractérisé en ce qu'**un message est envoyé sur un canal ou sur les deux canaux une fois qu'une cotation définie du temps global est atteinte.

11. Dispositif selon l'une quelconque des revendications 6 à 10, **caractérisé par** un processeur principal (216) intégré et par un coprocesseur (213) intégré, ainsi que par une mémoire (215) accessible depuis le coprocesseur et le processeur principal, ladite mémoire étant utilisée comme mémoire de messages pour les messages à venir et à envoyer et pour les informations associées relatives au statut.

12. Dispositif selon la revendication 11, **caractérisé en ce que** le coprocesseur (213) fournit des messages à venir dans la mémoire (215) destinée au processeur principal (216).

13. Dispositif selon la revendication 11 ou 12, **caractérisé en ce que** le coprocesseur (213) décide de manière autonome pour des messages sortants inscrits par le processeur principal (216) dans la mémoire (215) du moment de l'envoi desdits messages.

14. Dispositif selon l'une quelconque des revendications 6 à 13, **caractérisé en ce que** le coprocesseur (213) rend l'unité de réception (211) disponible avant la réception présumée d'un message, et **en ce que** le processus de réception effectif est exécuté de manière autonome par l'unité de réception (211) en interaction avec l'unité de transfert des données (214).

15. Dispositif selon l'une quelconque des revendications 6 à 14, **caractérisé en ce que** le coprocesseur (213) vient buter contre l'unité d'émission (210) à un moment approprié, afin que le processus d'émission effectif soit exécuté de manière autonome par l'unité d'émission (210) en interaction avec l'unité de transfert de données (214).

16. Dispositif selon l'une quelconque des revendications 1 à 15, **caractérisé par** une unité de détection de temps (212) réalisée sous la forme d'une unité fonctionnelle de l'élément matériel, ladite unité de détection du temps générant, pour l'unité de réception (211), un signal d'horloge (230) pour balayer le flux de bits entrants aux moments appropriés.

17. Dispositif selon l'une quelconque des revendications 1 à 16, **caractérisé par** une unité de détection de temps (212) réalisée sous la forme d'une unité fonctionnelle de l'élément matériel, laquelle génère, à partir de données connues a priori, un signal de surveillance (240), qui permet d'empêcher tout envoi en dehors de la fenêtre temporelle permise.
